# EUROPEAN PATENT APPLICATION

(11) **EP 3 674 519 A1**
(43) Date of publication of application: **01.07.2020**
(21) Application number: 18248055.8
(22) Date of filing: 27.12.2018
(51) Int. Cl.: F01D 5/18

(54) **COOLABLE COMPONENT FOR A STREAMING ENGINE AND CORRESPONDING MANUFACTURING METHOD**

(71) Applicant: Siemens Aktiengesellschaft, 80333 München (DE)
(72) Inventor: Jaksch, Peter, 60211 Norrköping (SE); Oesterholm, Robert, 60218 Norrköping (SE)

(57) **Abstract**

The present invention refers to a coolable component for a streaming engine providing an improved cooling. Furthermore, the present invention refers to a streaming engine containing such coolable component. Additionally, the present invention refers to a method of producing such coolable component. Furthermore, the present invention refers to a use of such coolable to replace existing coolable components.

## Description

The invention refers to a coolable component used for a streaming engine providing an improved design to allow a beneficial cooling of the outer surface of the coolable component. Additionally, the present invention refers to a streaming engine containing such coolable component. Furthermore, the present invention refers to a method of producing such coolable component. Additionally, the present invention refers to a use of the coolable component for a streaming engine, preferably a gas turbine and a steam turbine.

Coolable components like blades for streaming engines are known to the person skilled in the art. Additionally, methods of producing such coolable components like additive manufacturing are known. Such coolable components can be used, for example, in gas turbines, steam turbines and aircraft turbines.

Turbine blades providing a cooling system manufactured using additive manufacturing are known from DE 10 2009 048 665 A1. Herein, turbine blades providing a 3-dimensional grid are produced, wherein said grid fills the interior of the turbine blade. Said interior is surrounded by an outer wall providing holes connecting the interior with the outside of the turbine blade. That way the cooling air from the inside of the turbine blade can additionally provide a film cooling effect on the outside.

US 2008290215 A1 discloses that the interior of a blade produced using additive manufacturing is provided with a stabilizing structure made of stiffeners. Adapting their layout allows to provide a maximized stiffening of the blade using as few materials as possible.

WO 2008/046386 A1 discloses the production of a blade comprising a stiffening structure on its inside as a whole using additive manufacturing. Herein, the outer wall of the blade as well as the interior structures as build up layer by layer using, for example, selective laser melting using a CAD model of the blade.

Although, the design of coolable components as used in streaming engines while the topic of the research in the past there still needs to further improve the system provides to optimize the cooling and specifically adapted to the requirements. Additionally, new requirements based on different utilizations of the streaming engines and the attempt to further improve the benefit gained from such streaming engines by, for example, delaying the maintenance as far as possible imposes new challenges.

It is an object of the present invention to provide an improved coolable component, especially for gas turbines and aircraft turbines. Furthermore, it is an object of the present invention to provide a method for producing such coolable component. Additionally, it is an object of the present invention to provide a use of the inventive coolable component. These objects and further objects not explicitly stated above are solved by the invention as disclosed herein and also its specific embodiments as disclosed hereafter.

According to an aspect the present invention refers to a coolable component for a streaming engine, wherein the coolable component comprises an outer wall providing an outer surface adapted to be in contact with a hot fluid like a hot gas stream used in the streaming engine or to be coated with a coating that is adapted to be in contact with the hot fluid, wherein the coolable component comprises at least one cooling channel inside the outer wall adapted to guide a cooling fluid through said at least one cooling channel to cool the outer wall during operation of the streaming engine, wherein the at least one cooling channel is adapted to provide a convection cooling of the outer surface, wherein the at least one cooling channel is adapted to provide a counter wise flow of the cooling fluid through neighboring parts of the at least one cooling channel during operation of the streaming engine.

Surprisingly, it was noted that providing such counter wise flow of the cooling fluid greatly improved the cooling efficiency of the turbine. Although, the design must be greatly adapted to provide such specific flow directions the overall results were very beneficial and easily outweighed that additional work and complexity of the component. For example, the inlets for the cooling fluid cannot be localized in a certain area in the interior of the coolable component anymore, or the cooling fluid has first to be directed to the other side of the coolable component, for example, in a deeper layer before providing the counter wise flow.

According to another aspect the present invention refers to a streaming engine, preferably a gas turbine, containing an inventive coolable component.

According to another aspect the present invention refers to a method of producing an inventive coolable component comprising the step of manufacturing an outer wall including at least one cooling channel in the outer wall.

According to another aspect the present invention refers to a use of an inventive coolable component in a streaming engine, more preferred a gas turbine. Such systems typically benefit greatly from the inventive coolable component.

According to another aspect the present invention refers to a use of an inventive coolable component as replacement of a different or a used coolable component of a streaming engine.

### Brief description of the figures:

Figure 1: A semitransparent schematic side view of an inventive coolable component providing an at least partially curved outer surface.
Figure 2a: A cutout of a schematic cross section of the outer wall of the inventive turbine blade as shown in Figure 1.
Figures 2b, 2c: Cutout of a schematic cross section of the outer wall of alternative designs of an inventive coolable component.
Figure 3a, 3b and 3c: A cutout of semitransparent schematic sideviews of different inventive coolable components.
Figure 4: A cutout of a schematic cross section of an alternative inventive coolable component.
Figure 5: A cutout of a schematic cross section of an alternative inventive coolable component.

According to one aspect the present invention refers to the aforementioned coolable component.

The coating that might be applied on the outer surface of the coolable component preferably contains a TBC layer. The term "TBC layer" as used herein refers to a Thermal Barrier Coating layer preferably at least essentially consisting of a ceramic material. Such layer increases the resistance against the hot fluid outside the coolable component during usage of a streaming engine and allows using higher temperatures and/or provides higher lifetimes of the coolable component. The inventive coolable components are especially useful to be used with such TBC layer. Surprisingly, it appears that TBC layers placed unto the inventive coolable components provide an especial high life time. It is assumed that the inventive coolable components provide a more homogeneous cooling resulting in decreased thermal stress of the TBC layer.

Herein, the TBC layer can be applied directly onto the outer surface. However, for certain applications it can also be preferred to introduce an intermediate layer between the TBC layer and the outer surface to, for example, increase the bonding of the TBC layer to the outer surface. For typical applications this simple coating structure provides very beneficial results.

The component as referred to herein may particularly relate to a steam turbine or gas turbine component, such as a blade, vane, shroud, heat shield, tip, segment, insert, injector, seal, transition, burner, nozzle, strainer, orifice, liner, distributor, dome, boost, cone, lance, plate, resonator, piston or any corresponding retrofit kit.

Furthermore, it was noted that such counter wise flow can be beneficially used to normalize the temperature gradient of the cooling fluid to provide a more homogeneous cooling of the outer surface. According to further embodiments it is, thus, preferred that the at least one cooling channel provides multiple layers providing differing distances to the outer surface, wherein at least a part of the neighboring parts of the at least one cooling channel providing the counter wise flow of the cooling fluid are located in different layers. For example, it can be one cooling channel located in a deeper layer first directing the cooling fluid in one direction. Thereafter, the cooling channel can be changing the direction while changing to a layer above to cool the outer surface. Thus, the cooling fluid that already lost part of its cooling can be partially cooled down by the counter wise flow below normalizing the cooling effect.

However, it is also beneficial to provide such counter wise flow of the cooling fluid between neighboring parts of the at least one cooling channel being located in the outer surface. In further embodiments it is preferred that the neighboring parts of the at least one cooling channel are at least in part located near the outer surface. Typically, it is preferred that at least 60 %, more preferred at least 75 %, even more preferred at least 85 %, of the neighboring part of the at least one cooling channel providing the counter wise flow of the cooling fluid are located near the outer surface. The term "cooling channel near the outer surface" as used herein has the meaning that no cooling channel is located between such cooling channel and the outer surface.

According to further embodiments it is preferred that the at least one cooling channel provides multiple layers providing differing distances to the outer surface, wherein at least a part of the neighboring parts of the at least one cooling channel providing the counter wise flow of the cooling fluid is located in different layers and that the neighboring parts of the at least one cooling channel are at least in part located near the outer surface. Including such mixed structure allows a very simple design to provide a very homogeneous cooling of a defined area. Surprisingly it was noted that providing such more homogeneous cooling greatly reduces the stress on the component especially during the startup and especially stressful phases of the usage.

Furthermore, it was noted that it is typically beneficial that the design includes an upper limit of the distance between the outer surface and the neighboring parts of the at least one cooling channel being adapted to provide the counter wise flow of the cooling fluid. In further embodiments it is preferred that at least 15 %, more preferred at least 21 %, even more preferred at least 24 %, of the outer surface provides a distance of at most 4.1 mm, more preferred at most 3.8 mm, even more preferred at most 3.4 mm, from the outer surface to the neighboring parts of the at least one cooling channel being adapted to provide a counter wise flow of the cooling fluid. For typical embodiments it is preferred that at least 41 %, more preferred at least 44 %, even more preferred at least 60 %, of the outer surface provides such distance. It has to be understood than it is only required that the outer surface provides such distance to the nearest neighboring part of the at least one cooling channel.

Additionally, it was noted that it was typically beneficial that a certain percentage of the outer surface is located directly over the inventive neighboring parts of the at least one cooling channel being adapted to provide a counter wise flow of the cooling fluid. According to further embodiments it is preferred that at least 12 %, more preferred at least 15 %, even more preferred at least 21 %, of the outer surface is located above the neighboring parts of the at least one cooling channel being adapted to provide a counter wise flow of the cooling fluid. Herein, the phrase "outer surface being located above at least one cooling channel" according to the present invention has the meaning that the corresponding outer surface and interior of the at least one cooling channel can be connected by a straight line being perpendicular to the corresponding outer surface.

For certain components and applications, it was noted that it is beneficial to provide a very homogeneous cooling of the outer surface based on the inventive counter wise flow over majority of the outer surface. For example, it is in many cases beneficial to provide such cooling for heat shields at least in certain locations of the streaming engine. In further embodiments it is preferred that at least 90 %, more preferred at least 92 %, even more preferred at least 95 %, of the outer surface being located above the neighboring parts of the at least one cooling channel being adapted to provide a counter wise flow of the cooling fluid, provide a distance of the outer surface to the at least one cooling channel being at most 2.7 mm, more preferred at most 2.5 mm, even more preferred at most 2.2 mm, measured perpendicular to the outer surface.

The inventive convective cooling can be combined with further types of cooling like film cooling or impingement cooling to further adapt the coolable component to the specific needs of a device containing said coolable component. Herein, the additive manufacturing proved to be especially useful as the cooling of each coolable component can be specifically adapted to the corresponding requirements. Optimizing the cooling of each specific type of coolable component allows using the device at higher temperatures providing, for example, a higher efficiency or a longer usage without downtime of the device containing said component.

Furthermore, it was noted that it is typically beneficial to include independent cooling channels into the cooling design of an inventive coolable component. Herein, said separate cooling channels, for example, provide a flow of the cooling fluid from a central cooling fluid storage area within the coolable component to independent film cooling holes. In further embodiments it is preferred that the at least one cooling channel contains at least two cooling channels, more preferred at least four cooling channels, even more preferred at least seven cooling channels, providing the counter wise flow of the cooling fluid and preferably ending in a film cooling hole.

Although, an efficient cooling can also be provided by a single cooling channel containing a correspondingly adapted design it is typically beneficial to provide a simple design based on the multitude of cooling channels distributing the cooling fluid from, for example, from a central chamber within the coolable component. In further embodiments it is preferred that the at least one cooling channel contains at least two cooling channels, and wherein at least 50 %, more preferred at least 65 %, even more preferred at least 75 %, of the neighboring part of the at least one cooling channel being adapted to provide a counter wise flow of the cooling fluid consists of different cooling channels being adapted to provide the counter wise flow of the cooling fluid. Furthermore, it was noted that it was typically preferred to provide predefined lower limit of the pitch between the neighboring parts of the at least one cooling channel providing the counter wise flow of the cooling fluid. In further embodiments of the present invention it is preferred that at least 97 %, more preferred at least 99 %, even more preferred at least 99.9 %, of the at least one cooling channel being adapted to provide a counter wise flow of the cooling fluid, based on the length of the neighboring parts of the at least one cooling channel being adapted to provide the counter wise flow, provide a pitch being at least 0.3 mm, more preferred at least 0.5 mm, even more preferred at least 0.6 mm. Even more preferred all of the neighboring parts provide such minimum distance.

Additionally, it was noted that it was typically preferred that the cooling channels provide a minimum pitch between the neighboring parts of the at least one cooling channel providing the counter wise flow of the cooling fluid. Surprisingly, it was noted that such minimum distance seems to especially improve the long-term stability of the components. Although, it is not meant to a restricted invention anyways it is assumed that minor deviations resulting from the manufacturing procedure provide damages during the long-term usage under the extremely stressful conditions of usage. Thus, the risk of unexpected failure is greatly reduced such way. It was especially noted that too thin cooling channels provide an increased risk of blockage. In further embodiments it is preferred that at least 97 %, more preferred at least 99 %, even more preferred at least 99.9 %, of the at least one cooling channel being adapted to provide a counter wise flow of the cooling fluid, based on the length of the neighboring parts of the at least one cooling channel providing the counter wise flow, provide a pitch being at least 0.3 mm, more preferred at least 0.5 mm, even more preferred at least 0.6 mm. Even more preferred all of the at least one cooling channel providing a counter wise flow of the cooling fluid provides such minimum distance.

Furthermore, it was surprisingly noted that it is typically beneficial that the design of the at least one cooling channel contains the certain lower limit of the distance to the outer surface. In further embodiments it is preferred that at least 97 %, more preferred at least 98 %, even more preferred at least 98.5 %, of the at least one cooling channel being adapted to provide a counter wise flow of the cooling fluid, based on the length of the neighboring parts of the at least one cooling channels providing the counter wise flow, provide a distance from the outer surface being at least 0.21 mm, more preferred at least 0.24 mm, even more preferred at least 0.29 mm. Even more preferred all of the at least one cooling channel providing a counter wise flow of the cooling fluid provides such minimum distance.

It was further noted that the inventive cooling channels are beneficially located below a greater percentage of the outer surface. In further embodiments it is preferred that at least 17 %, more preferred at least 22 %, even more preferred at least 27 %, of the outer surface is located above the at least one cooling channel.

For typical applications it is beneficial to provide a pitch as well as the distance from the outer surface being selected from certain ranges to provide optimized results for highly stressed applications like, for example, components like blades utilized in a streaming engine. In further embodiments it is preferred that at least 85 % of the neighboring parts of the at least one cooling channel being adapted to provide a counter wise flow of the cooling fluid and being near of outer surface, based on the length of the neighboring parts of the at least one cooling channel, provides a pitch being selected from the range from 1.0 mm to 5.0 mm, more preferred from 1.4 mm to 3.4 mm, even more preferred from 1.5 mm to 3.0 mm and a distance between the at least one cooling channel and the outer surface being selected from the range from 0.35 mm to 2.3 mm, more preferred from 0.45 mm to 1.9 mm, even more preferred from 0.5 mm and 1.5 mm. Typically, it is preferred that that the aforementioned ranges applied to at least 90 %, more preferred 93 %, even more preferred 95 %, of the neighboring parts of the at least one cooling channel being adapted to provide a counter wise flow of the cooling fluid and being near the outer surface.

Although highly sophisticated designs provide additional benefits like an improved heat exchange between the cooling fluid and the outer surface it was noted that also simple design features provide highly beneficial improvements of the cooling. According to further embodiments it is preferred that at least 70 %, more preferred at least 85 %, even more preferred at least 90 %, of the neighboring parts of the at least one cooling channel being adapted to provide a counter wise flow of the cooling fluid, based on the length of the neighboring parts of the at least one cooling channels, are essentially parallel to each other and essentially parallel to the outer surface. For example, such essentially parallel design can be realized by a deviation of at most 10 %, more preferred at most 7 %, even more preferred at most 5 %, from the average value based on the arithmetic mean of said value. Herein, said arithmetic mean is calculated for a length of 0.5 cm, more preferred of 1 cm, of the neighboring parts of the at least one cooling channel being adapted to provide a counter wise flow of the cooling fluid.

To provide the required protection from breakage it is typically beneficial to provide a general minimum distance between the at least one cooling channel and the outer surface at least over a great percentage of the outer surface. In further embodiments it is especially preferred that at least 19 %, more preferred at least 17 %, even more preferred at least 22 %, most preferred at most 27 %, of the outer surface is located above the at least one cooling channel and provides a distance between the outer surface and at least one cooling channel of at least 3 %, more preferred at least 6 %, even more preferred at least 8 %, of the total thickness of the outer wall measured along a straight line being perpendicular to the outer surface. Additionally, it is typically preferred that the aforementioned distance is at least 0.3 mm, more preferred at least 0.33 mm, even more preferred at least 0.35 mm.

To further decrease the risk of the outer surface breaking open it is typically preferred that at most 5 %, more preferred at most 2 %, even more preferred 1 %, of the outer surface located above the at least one cooling channel provides a distance between the outer surface and at least one cooling channel of at most 3 % of the total thickness of the outer wall measured along a straight line being perpendicular to the outer surface. Typically, it is preferred that the aforementioned percentage of the outer surface refers to the at least one cooling channel, wherein the aforementioned distance is at most 5 %, even more preferred at most 7 %.

Furthermore, it was noted that it is typically beneficial to keep the cooling convection flow of the cooling liquid within a certain distance from the outer surface to be cooled. In further embodiments at least 13 %, more preferred at least 17 %, even more preferred at least 22 %, most preferred at least 27 %, of the outer surface is located above the at least one cooling channel and provides a distance between the outer surface and at least one cooling channel of at most 3 mm and at most 35 %, more preferred at most 29 %, even more preferred at most 25 %, of the total thickness of the outer wall measured along a straight line being perpendicular to the outer surface. Typically, it is preferred that the aforementioned fixed upper limit is at most 2.3 mm, more preferred at most 1,9 mm, even more preferred at most 1.6 mm.

Additionally, it was noted that the inventive coolable component is typically beneficially manufactured using additive manufacturing. In further embodiments it is preferred that at least a part of the coolable device containing the at least one cooling channel is manufactured using additive manufacturing. Herein, 3D printing is typically beneficially to be used. For many cases it is furthermore preferred that at least 65 %, more preferred at least 80 %, even more preferred at least 99 %, of the outer surface is manufactured using additive manufacturing.

Examples of coolable components that might be beneficially modified as stated above are selected from turbine blades like guide vanes or rotor blades, or heat shields as used in, for example, the turbine blade area or combustion chamber of a streaming engine. Such turbine blades can be used, for example, in the turbine part or the compressor part of a streaming engine. Such heat shields can be used, for example, in the compressor part or the turbine part or the burning chamber of a streaming engine

The inventive cooling system proved to be especially useful for coolable components providing a curvature of a greater part of the outer surface. Preferably at least 50 %, more preferred at least 70 %, even more preferred at least 80 %, of the outer surface is curved. The inventive system provides very defined and calculable flow of the cooling fluid along such curved outer surface allowing an improved cooling and higher reliability of the coolable component.

Furthermore, it was noted that the specified upper limit of the distance of the majority of the outer surface to the at least one cooling channel was beneficially further decreased for many applications. In further embodiments it is, thus, preferred that at least 60 % of the outer surface provides a distance to the at least one cooling channel of at most 1,8 mm, more preferred at most 1.55 mm, even more preferred at most 1.35 mm. For coolable components like blades it is often preferred that the aforementioned distance is at most 1.05 mm, more preferred at most 0.9 mm. Especially, it is typically preferred for especially coolable components providing a high thermal strain during use that the aforementioned requirement regarding the distance is fulfilled for at least 70 %, more preferred at least 85 %, even more preferred at least 95 %, of the outer surface.

The cooling channels of the inventive coolable components can provide different shapes in a cross section perpendicular to the direction of the cooling channel. For example, they can be essentially circular, semi-circular, rectangular, triangular, oval, rhomboidal, irregular or combinations thereof in different cross sections along the direction of the cooling channel.

The phrase "direction of the at least one cooling channel" as used herein refers to the general direction for which the at least one cooling channel is adapted to be flown through by the cooling fluid. In this context, for example, turbulences naturally are not part of such general direction.

Herein, the entry side of the cooling channels preferably provide a protection structure adapted to retain contaminations like micro particles. For example, such protection structure can be a sieve covering the entry side of the cooling channel to prevent such contaminations to enter the cooling channel resulting in a possible blockage of the cooling channel.

Typically, it is further preferred that the coolable component provides a shell like structure providing the outer wall and an interior chamber limited by the outer wall. Using such shell like structure decreases the weight of the coolable component being beneficial for certain applications. Herein, it is typically preferred that the interior chamber provides at least one supporting structure to increase the stability of the coolable component. For example, such supporting structure can be one or more support rod extending from the inside of the outer wall through the interior chamber to another part of the inside of the outer wall inside a turbine blade providing an interior chamber surrounded by an outer wall. Furthermore, the supporting structure can be a grid structure filling the interior chamber extending from the outer wall.

Typically, it was preferred that the coolable component provides a certain lower size limit to be able to introduce a more complex and efficient cooling structure. In further embodiments it is preferred that the coolable component has a depth of at least 7 cm, a width of at least 11 cm and a height of at least 13 cm, more preferred a depth of at least 10 cm, a width of at least 15 cm and a height of at least 20 cm.

Furthermore, it was noted that it is beneficial for many applications that the same cooling air is first used for convective cooling inside the cooling channels before it is at least partly, preferably completely, used for film cooling. Although, such layout requires a more detailed planning of the layout it typically greatly simplifies the cool air feed of coolable components providing both types of cooling, as it only requires a single inlet. In further embodiments of the present invention it is thus preferred that the coolable component is adapted to provide a flow of the cooling liquid first through the cooling channels to provide a convective cooling and second through film holes to provide a film cooling.

However, it can also be preferred to separate the film cooling from the interior convective cooling to provide a cooling that can be controlled according to the specific needs. In further embodiments of the present invention it is, thus, preferred that at least a part of the film holes, like at least 50 %, even more preferred at least 70 %, are not connected to the inventive cooling channels.

It is especially beneficial using a flexible method of manufacturing providing the possibility of realize very complex shapes of the outside but also inside the coolable component. According to further embodiments of the present invention it is thus preferred that the method of manufacturing the inventive coolable component contains additive manufacturing. It was noted that especially 3D-printing methods are very beneficial to realize the present invention. Typically, it is especially preferred that the complete coolable component is produced using additive manufacturing. Examples of such methods of additive manufacturing include selective laser melting (SLM), selective laser sintering (SLS), electron beam melting (EBM) and binder jetting. Naturally, other methods of additive manufacturing or specific variants of the methods mentioned before can be employed.

Herein, using a laser based method of additive manufacturing typically provided especially useful results as such methods are well established and allow to process materials with a high temperature resistance like nickel super-alloys.

According to another aspect the present invention refers to a streaming engine containing an inventive coolable component. Preferred streaming engines that can contain the inventive coolable component are gas turbines. Herein, it is especially preferred that said device contains at least one heat shield as used in the combustion chamber or turbine section and/or at least one blade like a guide vane or rotor blade being an inventive coolable component. Typically, it is especially preferred that at least 80 % of the rotor blades or guide vanes of at least 1 blade stage of a streaming engine are inventive coolable components. Typically, it is especially preferred that at least 30 %, more preferred at least 50 %, of the rotor blades and/or guide vanes are inventive coolable components.

According to another aspect the present invention refers to a method of manufacturing an inventive coolable component comprising the step of providing an outer wall including the at least one cooling channel in the outer wall, preferably using additive manufacturing.

Herein, it was noted that for typical cases it was beneficial to use additive manufacturing steps for the production of the inventive coolable component. In further embodiments it is preferred that the method of producing the inventive coolable component contains additive manufacturing. Typically, 3D printing manufacturing processes like selective laser melting, selective laser sintering, electron beam melting, and selective laser sintering are especially beneficial.

Furthermore, it was noted that the manufacturing process can be optimized by combining different manufacturing steps and build up the outer wall upon an existing part of the component. According to further embodiments it is preferred that the outer wall containing the at least one cooling channel is manufactured upon an existing base being produced separately using preferably conventional means of manufacturing. This allows, for example, to combine the benefits of multiple manufacturing processes to provide to further improve coolable component.

According to another aspect the present invention refers to a method of upgrading or servicing a streaming engine containing the step of introducing at least one inventive coolable component into the streaming engine, preferably wherein a different or used coolable component is replaced by the at least one inventive coolable component. Such different coolable component typically differs by means of its cooling method from the inventive coolable component. For example, only a combination of impingement cooling and film cooling or a simpler kind of convection cooling might be used. This might also result in a different outer surface, although, it is typically preferred that the outer surface of the inventive coolable component and the replaced different component are essentially the same. Such way an upgrade of an existing system can be achieved without influencing, for example, the stream of a hot fluid like a hot gas through a gas turbine. The inventive coolable components can, naturally, also be used to replace used coolable components during service or general over-haul. The inventive coolable components show very reliable results and are beneficially used in an operating scheme providing planned service intervals based on estimated lifetimes to provide a maximized operating time without the risk of components breaking down during the usage. The present invention also refers to a method of replacing a coolable component like a used coolable component in a streaming engine, wherein the coolable component is up-graded or serviced by replacing it with the inventive coolable component.

The inventive coolable components can also be a refurbished component. For example, the inventive coolable components can be a used component being inspected, optionally decoated, repaired, optionally coated again and introduced into the same or another streaming engine. Despite the great number of cavities inside the outer wall of the inventive coolable component the specific design allows to decrease or even avoid major damages resulting in irreparable components being required to be replaced by new parts. Thus, the apparently far more fragile structure still provides the required stability and durability to enable a long-term usage of the component requiring only typical refurbishing steps to allow a further use.

According to another aspect of the present invention refers to a use of an inventive coolable component in a streaming engine, more preferred a gas turbine.

According to another aspect the present invention refers to a use of an inventive coolable component as replacement for different or used coolable components of a streaming engine. It was noted that the benefits of the improved cooling in combination with the high reliability of the inventive coolable components resulted in them being especially suited for such purpose.

Further details are described hereafter for illustrating the present invention. Herein, the specific embodiments disclosed only represent preferred embodiments which do not limit the scope of protection only specified by the claims as attached hereto.

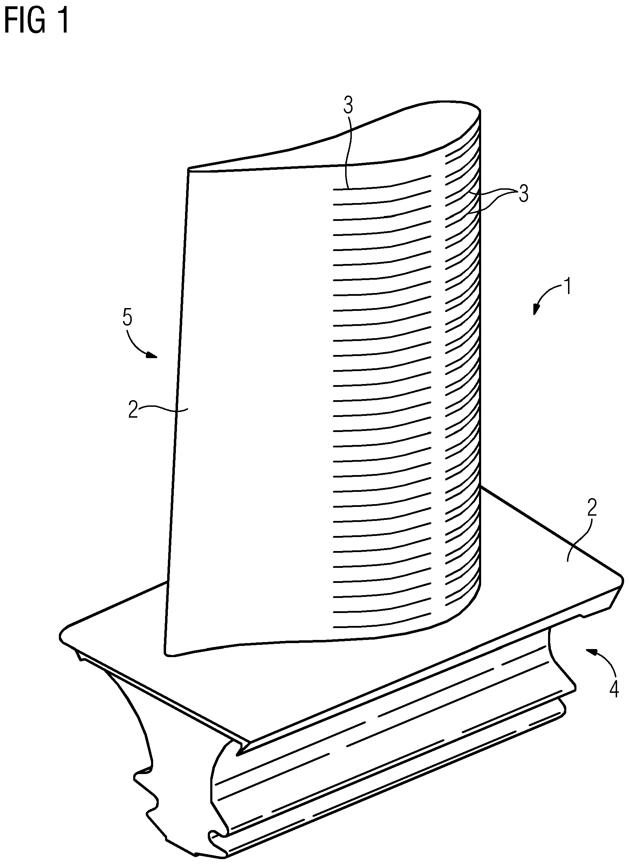

Figure 1 shows a semitransparent schematic side view of an inventive coolable component 1 being a turbine blade more specifically a rotor blade providing an at least partially curved outer surface 2. The blade part 5 is attached to a blade root 4 both providing outer surface 2 being adapted to directly or indirectly contact the hot fluid used within the streaming engine. The coolable component 1 shown was produced using 3D printing providing the outer wall containing the at least one cooling channel 3. Said at least cooling channel 3 provides at least partially a counter wise flow of the cooling fluid to optimize the cooling efficiency of the outer surface 2.

Herein, a part of the at least one cooling channel 3 providing a counter wise flow of the cooling fluid is visible through the outer surface 2 and the coating applied on the outer surface 2. Said part of the at least one cooling channel 3 providing the counter wise flow of the cooling fluid being shown is located near the outer surface 2. This allows homogeneous cooling of the outer surface 2 to, for example, reduce the stress applied onto the outer surface 2. Said outer surface 2 limits the outer wall of the coolable component 1. Said coating is adapted to be in contact with the hot fluid being a hot gas stream used in the streaming engine.

Said cooling channels 3 are adapted to guide a cooling fluid within the outer wall near the outer surface 2 to provide convection cooling. Herein, at least 97 % of the part of the at least one cooling channel 3 being adapted to provide a counter wise flow of the cooling fluid provides a pitch of at least 0.3 mm to the nearest part of the at least one cooling channel 3 providing such counter wise flow of the cooling fluid. Furthermore, at least 70 % of the neighboring parts of the at least one cooling channel 3 being adapted to provide a counter wise flow of the cooling fluid, based on the length of the neighboring parts of the at least one cooling channels 3, are essentially parallel to each other and essentially parallel to the outer surface 2.

The design is shown in figure 1 provides that especially homogeneous cooling of the large surface area. At least 20 % of the outer surface 2 provides a distance of at most 4.1 mm from the outer surface 2 to the neighboring parts of the at least one cooling channel 3 being adapted to provide a counter wise flow of the cooling fluid. Furthermore, at least 12 % of the outer surface 2 is located above the neighboring parts of the at least one cooling channel 3 being adapted to provide a counter wise flow of the cooling fluid. Herein, at least 90 % of the outer surface 2 being located above the neighboring parts of the at least one cooling channel 3 being adapted to provide a counter wise flow of the cooling fluid, provide a distance of the outer surface 2 to the at least one cooling channel 3 being at most 2.7 mm, measured perpendicular to the outer surface 2.

Is typically preferred the coolable component 1 according to Figure 1 provides multiple cooling channels 3. Herein, at least 50 % of the neighboring part of the at least one cooling channel 3 being adapted to provide a counter wise flow of the cooling fluid consists of different cooling channels 3 being adapted to provide the counter wise flow of the cooling fluid. This allows especially not only to homogenize the cooling of the outer surface 2, but also to provide the stronger cooling using the cooling fluid of the same temperature compared to the alternative.

The coolable component 1 of figure 1 is adapted to replace an existing turbine blade used in the streaming engine providing an upgrade of the existing system. The improved cooling provides the possibility to increase the temperature used inside the streaming engine to further increase the efficiency. Although the more homogeneous cooling method reduces the stress and enables an increased long-term usage of the coolable component 1.

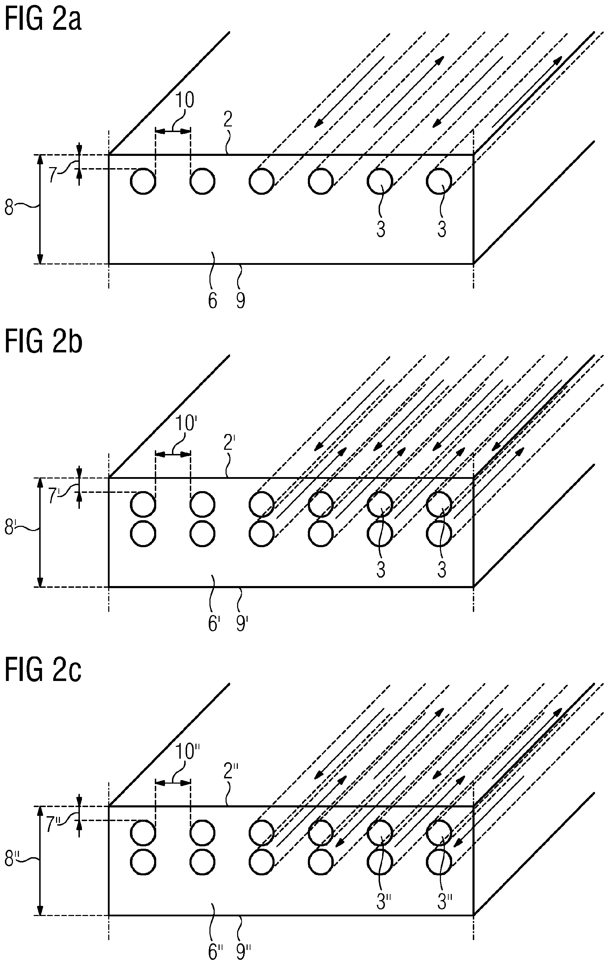

Figure 2a shows a cutout of a schematic cross section of the outer wall 6 of the inventive turbine blade as shown in figure 1. For the reason of simplification, the surface is shown as straight line without curvature. The cutout is essentially perpendicular to the outer surface 2 and essentially perpendicular to the direction of the flow of the cooling fluid. The cooling channels 3 are arranged with essentially the same pitch 10 and distance to the outer surface 2. While the distance of the cooling channels 3 to the outer surface 2 is small the distance to the inner surface 9 is bigger.

The cutout shows six cooling channels 3 being part of the at least one cooling channel 3, wherein the four cooling channels 3 on the right are also schematically shown with regard to their three dimensional structure. Herein the arrows included in figure 2a indicate the direction of the flow of the cooling fluid. Thus, the part of the coolable component shown in figure 2a provides a layer of the at least one cooling channel 3 near the outer surface 2, therein the cooling fluid flows through said cooling channels 3 with alternating directions.

Said cooling channels 3 provide an essentially identical pitch 10. Simultaneously, the distance 7 between the outer surface 2 and the cooling channel 3 is far smaller than the distance 8 between the outer surface 2 and the inner surface 9.

Figures 2b and 2c show alternative designs of an inventive coolable component. Comparable to figure 2a for the reason of simplification the surface as shown is reduced to a straight line without curvature. Although the cutout is essentially perpendicular to the outer surface 2', 2" and essentially perpendicular to the direction of the flow of the cooling fluid. Contrary to the embodiment shown in figure 2a the part of the at least one cooling channel 3', 3" shown in the figure does not only provide a single layer near the surface, but two layers being arranged on top of each other located within the outer wall 6', 6". Herein, the parts of the at least one cooling channel 3', 3" providing the counter wise flow of the cooling fluid are arranged in these different layers of the at least one cooling channel 3', 3".

Said cooling channels 3', 3" provide an essentially identical pitch 10', 10" between the cooling channels 3', 3" within each layer or between the neighboring cooling channels 3', 3" or the upper and lower layer. Simultaneously, the distance 7', 7" between the outer surface 2', 2" and the cooling channel 3', 3" is far smaller than the distance 8', 8" between the outer surface 2', 2" and the inner surface 9', 9".

In figure 2b the layer of the at least one cooling channel 3' being near the outer surface 2'provides a flow of the cooling fluid in one direction while the layer of the at least one cooling channel 3' below provides a counter wise flow of the cooling fluid.

In figure 2c the layout of the at least one cooling channel 3" near the outer surface 2" provides an alternating flow of the cooling fluid for neighboring parts of the at least one cooling channel 3". Simultaneously the layer of the at least one cooling channel 3" below provides a flow of the cooling fluid being counter wise to the part of the at least one cooling channel 3" above.

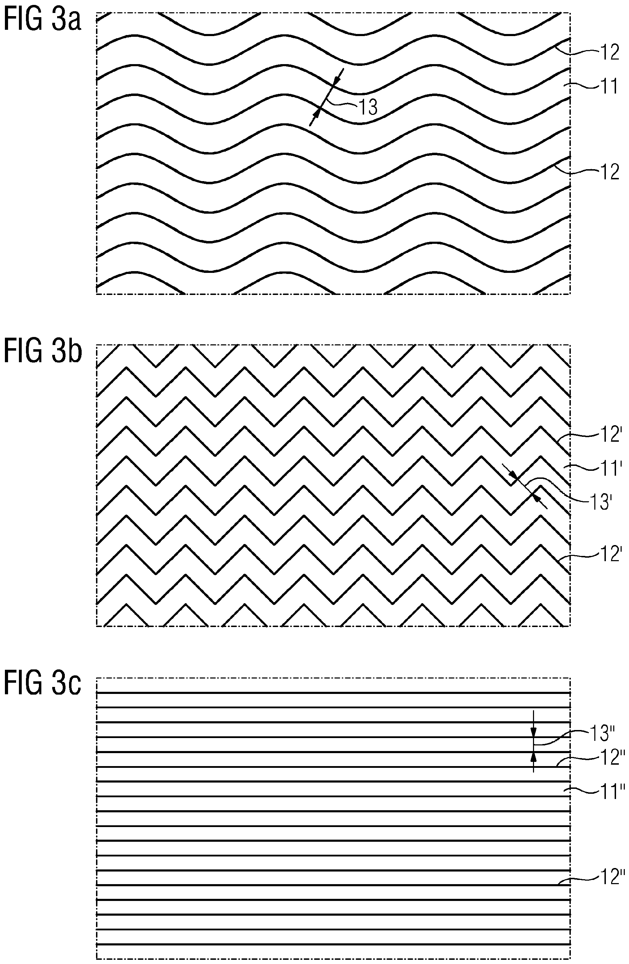

Figure 3a, 3b and 3c show a cutout of semitransparent schematic sideviews of different inventive coolable components. Herein, the coolable components provide different layouts of the at least one cooling channel 12, 12', 12" being visible through the outer surface 11, 11', 11" for illustrative purposes. It must be noted that, for example, the at least one cooling channel 12, 12', 12" is shown in the form of essentially straight lines, although, a minor curvature naturally results simply from the curvature of the outer wall. Additionally, the channels shown are typically only essentially parallel, as a curved outer wall also results in small adaptions to be included into design resulting in small deviations from the real parallel arrangement.

In figure 3a the part of the at least one cooling channel 12 shown is arranged in the form of essentially parallel curved lines providing essentially the same pitch 13. Such an arrangement typically provides a more intense heat exchange compared to mere straight lines.

In figure 3b the part of the at least one cooling channel 12' shown is arranged in form of essentially parallel straight lines providing sharp bends. The sharp bends as shown in this inventive embodiment provide an angle between 80° and 100°. Surprisingly, such arrangement providing a less laminar flow provided a very efficient heat exchange and especially stressed parts of the coolable component. For example, such arrangement proved to be beneficial for areas of the coolable component being required to be cooled especially well.

In figure 3c the part of the at least one cooling channel 12" shown is arranged in form of essentially straight lines. This provides well calculable cooling with a low chance of plugging the at least one cooling channel 12" based on the homogeneous laminar flow of the cooling fluid through said part of the at least one cooling channel 12".

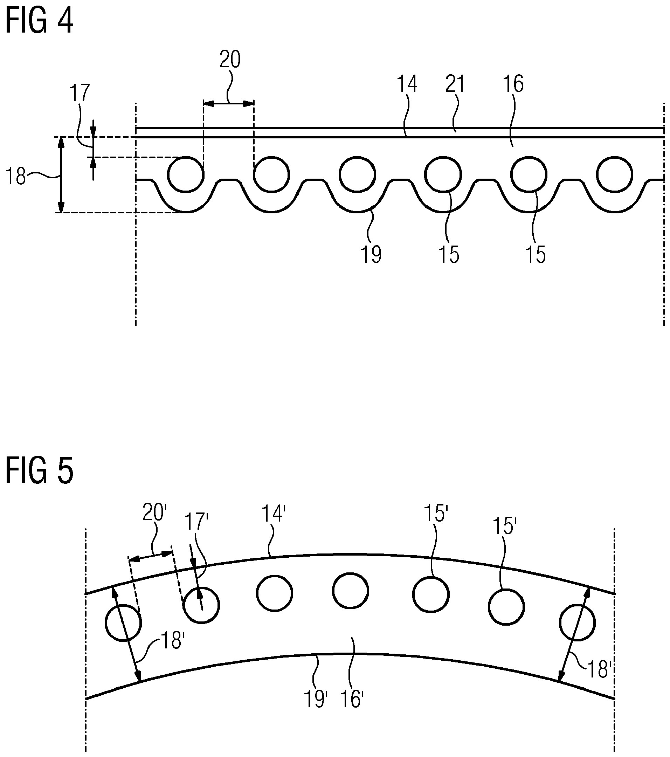

Figure 4 show a cutout of a schematic cross section of an alternative inventive coolable component. Herein, said cutout is essentially rectangular to the outer surface 14 and essentially rectangular to the direction of the flow of the cooling fluid through the at least one cooling channel 15. Said outer surface 14 is covered by a coating 21 to improve the properties of the surface.

Herein, an alternative layout of the outer wall 16 containing the at least one cooling channel 15 is shown. While the pitch 20 between the cooling channels 15 is essentially identical the outer layout of the outer wall 16 is modified. In more detail, the sidewall is relatively thin and provides thickened areas at the location of the at least one cooling channel 15. Therefore, the distance 17 between the outer surface 14 and the cooling channel 15 is essentially identical for the cooling channels 15. However, the distance 18 of the outer surface 14 to the inner surface 19 is changing based on the wave like structure of the inner surface 19. Such layout provides the possibility to realize the inventive coolable component will far less material reducing the overall weight of the coolable component. Such reduced weight is, for example, especially interesting for the moving parts of a device like a streaming engine. For example, providing rotor blades with such layout allows a great reduction of the weight of said rotor blades reducing the inertia and, thus, allow a faster change of the rotation speed of the rotor containing such rotor blades.

Figure 5 additionally shows a cutout of a schematic cross section of an alternative inventive coolable component. Herein, the outer surface 14' provides no coating. Below the curved outer surface 14', the at least one cooling channel 15' is placed with an essentially equal distance from the outer surface 14'. The part of the at least one cooling channel 15' as shown provides essentially the same pitch 20' between the cross sections of the cooling channels 15'. Comparable to figure 2 the distance 17' between the outer surface 14' and the at least one cooling channel 15' and the part of the at least one cooling channel 15' as shown is significantly smaller than the distance 18' between the outer surface 14' and the inner surface 19' of the outer wall 16'.

## Claims

1. Coolable component (1) for a streaming engine,
wherein the coolable component (1) comprises an outer wall (6, 6", 6", 16, 16') providing an outer surface (2, 2", 2", 11, 11', 11", 14, 14')adapted to be in contact with a hot fluid like a hot gas stream used in the streaming engine or to be coated with a coating (21) that is adapted to be in contact with the hot fluid,
wherein the coolable component (1) comprises at least one cooling channel (3, 3', 3", 12, 12', 12", 15, 15') inside the outer wall (6, 6', 6", 16, 16') adapted to guide a cooling fluid through said at least one cooling channel (3, 3', 3", 12, 12', 12", 15, 15') to cool the outer wall (6, 6', 6", 16, 16') during operation of the streaming engine, wherein the at least one cooling channel (3, 3', 3", 12, 12', 12", 15, 15') is adapted to provide a convection cooling of the outer surface (2, 2', 2", 11, 11', 11", 14, 14'), wherein the at least one cooling channel (3, 3', 3", 12, 12', 12", 15, 15') is adapted to provide a counter wise flow of the cooling fluid through neighboring parts of the at least one cooling channel (3, 3', 3", 12, 12', 12", 15, 15') during operation of the streaming engine.

2. Coolable component (1) according to claim 1, wherein the at least one cooling channel (3, 3', 3", 12, 12', 12", 15, 15') provides multiple layers providing differing distances to the outer surface (2, 2', 2", 11, 11', 11", 14, 14'), wherein at least a part of the neighboring parts of the at least one cooling channel (3, 3', 3", 12, 12', 12", 15, 15') providing the counter wise flow of the cooling fluid are located in different layers.

3. Coolable component (1) according to any of claims 1 to 2, wherein the neighboring parts of the at least one cooling channel (3, 3', 3", 12, 12', 12", 15, 15') are at least in part located near the outer surface (2, 2', 2", 11, 11', 11", 14, 14').

4. Coolable component (1) according to any of claims 1 to 3, wherein the at least one cooling channel (3, 3', 3", 12, 12', 12", 15, 15') provide multiple layers providing differing distances to the outer surface (2, 2', 2", 11, 11', 11", 14, 14'), wherein at least a part of the neighboring parts of the at least one cooling channel (3, 3', 3", 12, 12', 12", 15, 15') providing the counter wise flow of the cooling fluid are located in different layers and
that the neighboring parts of the at least one cooling channel (3, 3', 3", 12, 12', 12", 15, 15') are at least in part located near the outer surface (2, 2', 2", 11, 11', 11", 14, 14').

5. Coolable component (1) according to any of claims 1 to 4, wherein at least 97 % of the at least one cooling channel (3, 3', 3", 12, 12', 12", 15, 15') being adapted to provide a counter wise flow of the cooling fluid, based on the length of the neighboring parts of the at least one cooling channel (3, 3', 3", 12, 12', 12", 15, 15') being adapted to provide the counter wise flow, provide a pitch (10, 10', 10", 13, 13', 13", 20, 20') being at least 0.3 mm.

6. Coolable component (1) according to any of claims 1 to 5, wherein at least 70 % of the neighboring parts of the at least one cooling channel (3, 3', 3", 12, 12', 12", 15, 15') being adapted to provide a counter wise flow of the cooling fluid, based on the length of the neighboring parts of the at least one cooling channels (3, 3', 3", 12, 12', 12", 15, 15'), are essentially parallel to each other and essentially parallel to the outer surface (2, 2', 2", 11, 11', 11", 14, 14').

7. Coolable component (1) according to any claims 1 to 6, wherein at least 20 % of the outer surface (2, 2', 2", 11, 11', 11", 14, 14') provides a distance of at most 4.1 mm from the outer surface (2, 2', 2", 11, 11', 11", 14, 14') to the neighboring parts of the at least one cooling channel (3, 3', 3", 12, 12', 12", 15, 15') being adapted to provide a counter wise flow of the cooling fluid.

8. Coolable component (1) according to any of claims 1 to 7, wherein at least 12 % of the outer surface (2, 2', 2", 11, 11', 11", 14, 14') is located above the neighboring parts of the at least one cooling channel (3, 3', 3", 12, 12', 12", 15, 15') being adapted to provide a counter wise flow of the cooling fluid.

9. Coolable component (1) according to any of claims 1 to 8, wherein at least 90 % of the outer surface (2, 2', 2", 11, 11', 11", 14, 14') being located above the neighboring parts of the at least one cooling channel (3, 3', 3", 12, 12', 12", 15, 15')being adapted to provide a counter wise flow of the cooling fluid, provide a distance of the outer surface (2, 2', 2", 11, 11', 11", 14, 14') to the at least one cooling channel (3, 3', 3", 12, 12', 12", 15, 15') being at most 2.7 mm, measured perpendicular to the outer surface (2, 2', 2", 11, 11', 11", 14, 14').

10. Coolable component (1) according to any of claims 1 to 9, wherein the coolable component (1) is selected from guide vanes or rotor blades of a turbine, guide vanes or rotor blades of a compressor, and heat shields for a streaming engine.

11. Coolable component (1) according to any of claims 1 to 10, wherein the at least one cooling channel (3, 3', 3", 12, 12', 12", 15, 15') contains at least two cooling channels (3, 3', 3", 12, 12', 12", 15, 15'), and
wherein at least 50 % of the neighboring part of the at least one cooling channel (3, 3', 3", 12, 12', 12", 15, 15') being adapted to provide a counter wise flow of the cooling fluid consists of different cooling channels (3, 3', 3", 12, 12', 12", 15, 15') being adapted to provide the counter wise flow of the cooling fluid.

12. Coolable component (1) according to any of claims 1 to 11, wherein the coolable component (1) has been manufactured using additive manufacturing

13. Streaming engine containing a coolable component (1) according to any of claims 1 to 12.

14. Method of manufacturing a coolable component (1) according to any of claims 1 to 12 comprising the step of providing an outer wall (6, 6', 6", 16, 16') including the at least one cooling channel (3, 3', 3", 12, 12', 12", 15, 15') in the outer wall (6, 6', 6", 16, 16'), preferably using additive manufacturing.

15. Use of a coolable component (1) according to any of claims 1 to 12 as replacement of a different or a used coolable component (1) of a streaming engine.
